# EUROPEAN PATENT SPECIFICATION

(11) **EP 3 300 209 B1**
(45) Date of publication and mention of the grant of the patent: **20.04.2022**
(21) Application number: 16190644.1
(22) Date of filing: 26.09.2016
(51) Int. Cl.: H02J 3/38, F24H 9/20, F24D 19/10, H05B 1/02, G05D 23/19

(54) **ENERGY EFFICIENT ENERGY GENERATION AND CONSUMPTION SYSTEM AND METHOD FOR ENERGY EFFICIENT OPERATING OF THIS SYSTEM**
ENERGIEEFFIZIENTES ENERGIEERZEUGUNGS- UND ENERGIEVERBRAUCHSSYSTEM UND VERFAHREN ZUM ENERGYEFFIZIENTEN BETRIEBEN DIESES SYSTEMS
SYSTÈME DE PRODUCTION ET DE CONSOMMATION D'ÉLECTRICITÉ EFFICACE EN ÉNERGIE ET MÉTHODE DE MISE EN OEUVRE EFFICACE EN ÉNERGIE DE CE SYSTÈME

(43) Date of publication of application: 28.03.2018
(73) Proprietor: Laborelec CVBA, 1630 Linkebeek (BE)
(72) Inventor: BOUCHAIR, Nabil, 1190 Forest (BE); JAHN, Rafaël, 3080 Tervuren (BE); CRUNELLE, Cathy, 7090 Braine-le-Comte (BE); MOENCH, Pierre, 1180 Uccle (BE)
(74) Representative: Arnold & Siedsma

(56) References cited:
- EP-B1- 1 652 017
- GB-A- 2 514 128
- JP-A- 2004 194 485
- US-A1- 2011 147 473
- US-A1- 2015 104 160

## Description

### FIELD OF THE INVENTION

The invention relates to the field of energy generation and consumption systems, more particularly to energy flexible systems of that kind. The invention also relates to a method for energy efficient operating of an energy generation and consumption system.

### BACKGROUND TO THE INVENTION

Today electrical systems, especially those who are meant to be energy flexible, are typically constructed as a combination of sub-systems or other arrangements, in order to realize the required global performance. While one might expect to build such combination as a mere concatenation or serial connection of such sub-systems, the nature of part of the used devices, in particular a full electronic realization, in combination with their multi-functional character, especially versus their primary function (like temperature regulation) and other safety functions, brings about technical considerations with respect to the way of connecting, in order to guarantee the by technical standard required performance.

As an example, it is worth noting that, a typical home photovoltaic (PV) installation usually injects more than 60% of the produced energy in the grid during the day. A so-called Generated Power Diverter or GPD helps auto-consuming the surplus power locally generated. The GPD system as known from the art however has its limits, particularly regarding compatibility and safety. A solution is needed in order to address these limits. A prior art example of photovoltaic DC heater system is described in US2015104160 A1. It includes a temperature based cut-off control loop to avoid overheating.

### AIM OF THE INVENTION

It is the aim of the invention to provide solutions for building an energy efficient energy generation and consumption system by providing flexibility with respect to energy usage, in particular renewable energy (like PV) and even more in particular use involving a kind of storage (e.g. use of water heating), while eliminating current limitations particularly regarding compatibility and safety aspects.

### SUMMARY OF THE INVENTION

In a first aspect of the invention there is provided an energy efficient energy generation and consumption system according to claim 1.

In an embodiment, the means for providing electrical power is provided with a plurality of available power lines, and moreover all these available power lines are arranged in the same way. More particularly, it may be that not only the power lines between the means for providing electrical power and first electronic device are according to a specific and similar configuration, also the power lines between first and second electronic control device, and between second electronic control device and the to be electrically powered device for electrical heating respectively are arranged in the same way. Such configuration is for instance referred to as either a 2-phase configuration or either a 3-phase configuration. Possibly, the first electronic control device is only capable of providing on-off control based on a reference temperature, and the second electronic control device is capable of providing variable power control, e.g. variable voltage and/or variable current control. It may be that the first electronic control device is provided with safety protection regulation, such as for instance an overheating protection.

The system may further be operable solely by use of a (grid) power sensor being part of the power supply control device - and solely used thereby; and a temperature sensor being part of the first electronic control device - and solely used thereby. As an example such power sensor could be a current sensor.

According to a second aspect of the invention there is provided a method for energy efficient operating of an energy generation and consumption system according to claim 6.

Embodiments of the invention are defined in the dependent claims.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

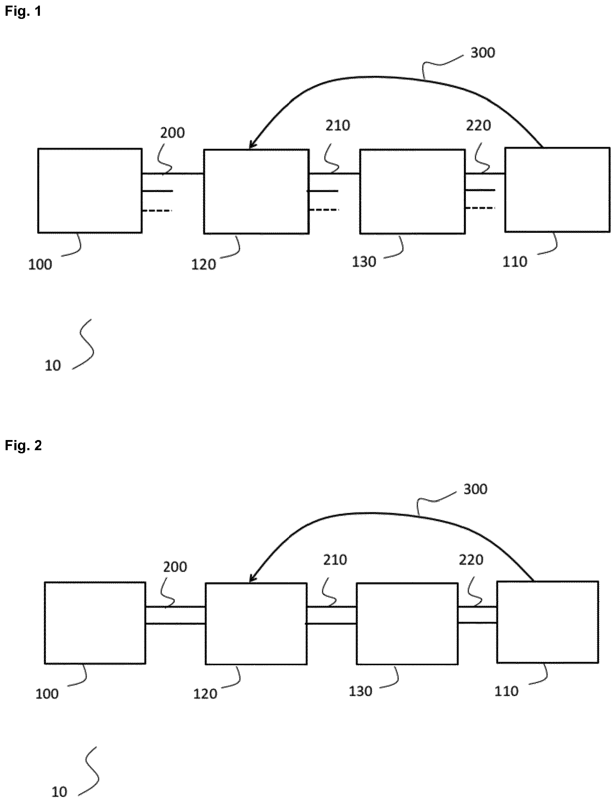

**Figure 1** illustrates schematically an embodiment of the electrical heating arrangement in accordance with the present invention.
**Figure 2** illustrates schematically a further embodiment of the electrical heating arrangement in accordance with the present invention.
**Figure 3** illustrates schematically an embodiment of the energy efficient energy generation and consumption system in accordance with the present invention.
**Figure 4** illustrates schematically an embodiment of a Generated Power Diverter system installation according to the art.
**Figure 5** illustrates schematically an embodiment of the wiring of a Generated Power Diverter controller with a thermostat according to the art.
**Figure 6** illustrates schematically an embodiment of the wiring of a Generated Power Diverter controller with a thermostat and a heating element in accordance with the present invention.
**Figure 7** illustrates schematically an embodiment of a Generated Power Diverter system installation in accordance with the present invention.

### DETAILED DESCRIPTION OF THE INVENTION

The invention relates to energy efficient energy generation and consumption systems, comprising an energy supply installation; a power supply control device adapted to determine whether it is efficient to supply the generated energy either to the grid or use otherwise by energy consuming devices, preferably with an energy storage capability; in a further particular combination with an electrical heating arrangement in itself comprising of a to be electrically powered device for electrical heating; a first control device, adapted for determining the achieved temperature (by the to be electrically powered device); a second electronic control device, adapted for determining energy efficient powering conditions, whereby the first electronic control device being fully electronic. The energy supply installation is for example a photovoltaic energy supply system, or delivered by another local energy source (for example a micro-cogeneration unit).

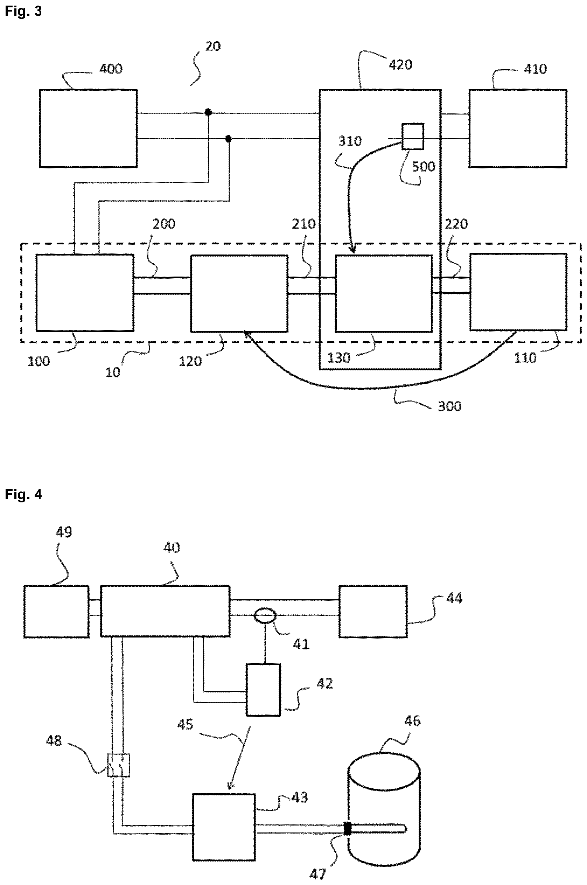

The invention provides a global solution wherein one or more of the following features are used, in particular a particular ordering of the connection, a particular implementation on the power lines, a selected way of power control. The invented solution provides a complex energy efficient operating of an energy generation and consumption system while still being based only on two simple decoupled control loops and requiring only a minimal amount of sensors. Allowing the use of a Generated Power Diverter or GPD with variable voltage outputs with an electronic (water boiler) thermostat, the invention provides a new scheme on how to use a GPD that keeps all electronic thermostat functions and safety. A GPD system according to the art is depicted in Figure 4. This typical installation of a GPD shown comprises a current sensor 41, a sensor transmitter 42 and a GPD controller 43. The current sensor 41 is based on current clamps, placed around the main feed just after the utility meter 44 to measure the exported or imported current to the grid. The sensor transmitter 42 transmits the exported or imported power values to the GPD controller 43. This transmission is for instance performed via a radio link or RF communication 45. The GPD controller 43 regulates the energy supplied to the water heater 46 by regulating the voltage at the water heater inlet 47, typically between 80V to 230V. Further illustrated in Figure 4 are the main consumer unit or console 40, which is connected to the PV power switch or PV system isolator 49. An immersion double pole isolator 48 connects the GPD controller 43 with the main consumer unit 40 via an immersion circuit.

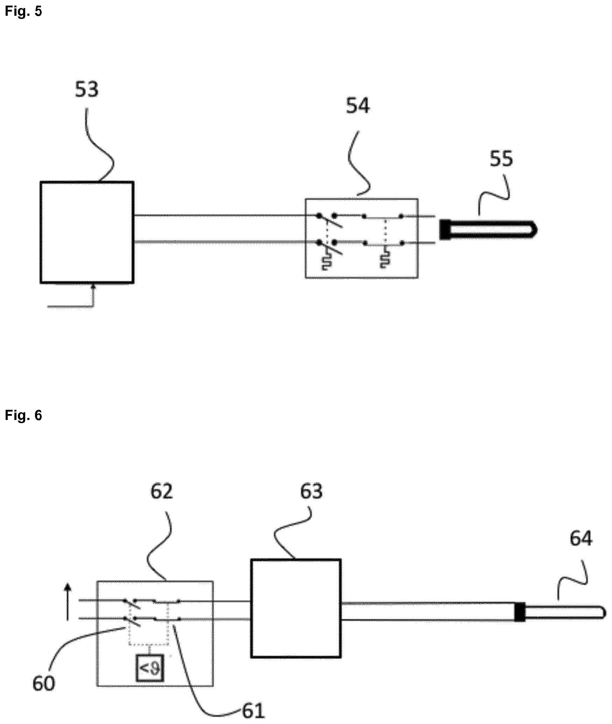

A water heater 46 should be equipped with a particular thermal cut off switch. In typical water heaters the overheating protection provided by the thermal cutoff is directly included in the thermostat, usually with two switches in series. In the art, the GPD controller 53 is wired in series with the thermostat 54, as shown in Figure 5. Therefore, the overheating protection in case of a faulty thermostat is always maintained. With a mechanical thermostat 54, varying the input voltage has no effect on the correct functioning of the thermostat since it relies on thermo-mechanical properties for temperature regulation. Further illustrated in Figure 5 is a heating element 55.

On the contrary, problems arise when instead of a mechanical thermostat an electronic thermostat is used. Indeed when the inlet voltage of the electronic thermostat goes below a certain voltage, e.g. more than 10% below 230V, the thermostat ceases to work properly and simply shuts down. In such electronic thermostats, the overheating safety is guaranteed by the electronic thermostat itself with an electrical safety circuit. The electronic thermostat can be split into 3 parts: a thermo-well, a regulation circuit and a power distribution circuit. The thermo-well comprises of two circuits: one circuit for the temperature sensors, and a second safety circuit composed of thermal fuse triggering overheating protection defined according to a particular heater product standard. The regulation circuit, which is an electronic circuit, is meant to regulate the temperature according to the desired set point by controlling output relays (ON/OFF regulation). The power distribution circuit that feeds the water elements is composed of relays controlled by the electronic circuit.

The electronic thermostat is fed at its inlet by a 230V supply, the output of the thermostat is wired directly to the inlet of the heating element, the output is controlled using electrical switches with two positions: closed (the water heater is on heat position) or opened (the feeding circuit is opened and the water heater is not warming up, no current flowing through the resistor). The open position can occur in two circumstances: either in normal use when the water boiler has reached its desired temperature and the electronic thermostat ordered to open the feeding circuit; or when the water boiler has reached the overheating limits defined by particular standards.

As mentioned above, state-of-the-art GPD systems that use voltage regulation to regulate the power imported in a water boiler are limited to a mechanical thermostat. When it comes to electronic thermostat regulating the voltage of the thermostat inlet leads to problems, because such thermostats don't accept too low voltage. This invention allows the use of such GPD with any type of thermostat.

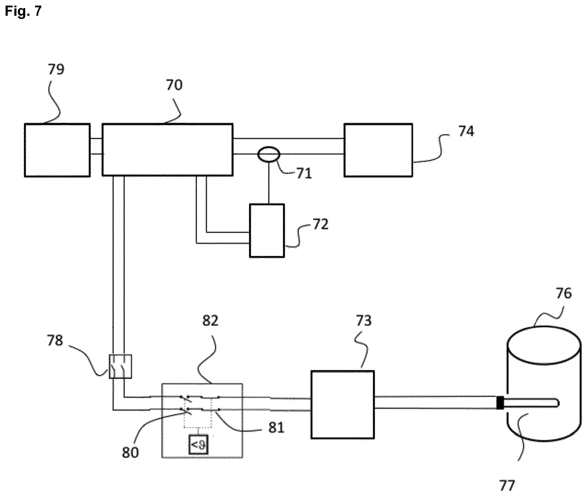

Allowing the use of a GPD with an electronic thermostat, the invention provides a solution wherein the GPD controller 63 is wired between the thermostat 62 and the heating element 64 as shown in Figure 6. In order to highlight both regulation and safety functions executed by the electronic thermostat 62, a control switch 60 and a controlled push button 61 are depicted within its symbol representation - even though in practice both functions are realized by the same set of switches. In order to keep the thermostat functions including safety function, the thermostat is placed before the GPD controller 63 that feeds directly the heating element 64. Referring further to Figure 7, illustrating an embodiment of a Generated Power Diverter system installation according to the present invention, the thermostat 82 keeps full control of the heating of the resistors of the water boiler 76; the GPD controller 73 only regulates the power that is provided by the thermostat 82 when power is available. In case of any regulation issue and overheating the thermostat 82 will open the feeding relays cutting any power that feeds via the GPD controller 73 the heating elements 77. This system works with electronic and mechanical thermostat, and keeps all the current electronic thermostat functionalities. The other elements in Figure 7 are like in Figure 4 a current sensor 71, a sensor transmitter 72, the utility meter 74, the main consumer unit or console 70, which is connected to the PV power switch or PV system isolator 79. An immersion double pole isolator 78 connects the GPD controller 73 with the main consumer unit 70 via an immersion circuit.

## Claims

1. An energy efficient energy generation and consumption system (20), comprising an energy supply installation (400); an energy consuming device (110) for electrical heating, preferably with an energy storage capability; whereby the system further comprises a power supply control device (420) adapted to determine whether it is efficient to supply the generated energy either to the grid (410) or for direct use otherwise by said energy consuming device; and an electrical heating arrangement (10) comprising: means (100) for providing electrical power; a to be electrically powered device (110) for electrical heating; a first electronic control device (120) adapted to determine the achieved temperature and capable to act on at least a part of said means (100) for providing electrical power in accordance therewith; a second electronic control device (130) adapted to determine energy efficient powering conditions and of acting on at least part of said means (100) for providing electrical power in accordance therewith; whereby in this electrical heating arrangement at least part (200) of said means (100) for providing electrical power being connected to said first electronic control device (120), which provides at least one first controlled power line (210); said at least one first controlled power line (210) being connected to said second electronic control device (130), which provides at least one second controlled power line (220); and said at least one second controlled power line (220) being connected to said energy consuming device (110), wherein said second electronic control device (130) being part of said power supply control device (420), and said means (100) for providing electrical power being connected to said energy supply installation (400) or to the grid (410) via said power supply control device (420).

2. The system (20) of claim 1, wherein said means (100) for providing electrical power of the arrangement (10) is provided with a plurality of available power lines, said plurality of available power lines being arranged in the same way.

3. The system (20) of claim 1 or 2, wherein said first electronic control device (120) of the arrangement (10) being only capable of providing on-off control based on a reference temperature, and said second electronic control device (130) being capable of providing variable power control.

4. The system (20) of any of the previous claims, wherein said first electronic control device (120) being provided with safety protection regulation.

5. The system (20) of any of the previous claims, being operable solely by use of a power sensor (500) being part of said power supply control device; and a temperature sensor (510) being part of said first electronic control device (120).

6. A method for energy efficient operating of an energy generation and consumption system (20) in accordance with claims 1 to 5, comprising the following steps: use of a first control loop (300) based on temperature by use of the first electronic control device (120) adapted for determining the achieved temperature and use of a second control loop (310) based on energy flow by use of the second electronic control device (130) adapted for determining energy efficient powering conditions, whereby said first and second control loop (300, 310) being entirely decoupled.

## Patentansprüche

1. Energieeffizientes Energieerzeugungs- und -verbrauchssystem (20), umfassend:
einer Energieversorgungsanlage (400); einem Energie verbrauchenden Gerät (110) zum elektrischen Heizen, vorzugsweise mit Energiespeicherfähigkeit; wodurch das System ferner eine Regeleinrichtung zur Energieversorgung (420) umfasst, die so angepasst ist, dass sie bestimmen kann, ob es effizient ist, die erzeugte Energie entweder an das Netz (410) oder zur anderweitigen direkten Verwendung durch das Energie verbrauchende Gerät zu liefern; und eine elektrische Heizanordnung (10), umfassend: einer Einrichtung (100) zum Bereitstellen von elektrischer Energie;
einem elektrisch zu betreibenden Gerät (110) zum elektrischen Heizen; einer ersten elektronischen Regeleinrichtung (120), die so angepasst ist, um die erreichte Temperatur zu bestimmen, und die in der Lage ist, auf mindestens einen Teil der Einrichtung (100) einzuwirken, um dementsprechend elektrische Energie bereitzustellen; einer zweiten elektronischen Regeleinrichtung (130), die so angepasst ist, dass sie energieeffiziente Energieversorgungsbedingungen bestimmen kann und in der Lage ist, zumindest auf einen Teil der Einrichtung (100) zum Bereitstellen von elektrischer Energie in Übereinstimmung damit einzuwirken;
wobei bei dieser elektrische Heizanordnung zumindest Teil (200) der Einrichtung (100) zum Bereitstellen von elektrischer Energie mit der ersten elektronischen Regeleinrichtung (120) verbunden ist, die zumindest eine erste gesteuerte Stromleitung (210) bereitstellt; wobei mindestens eine erste gesteuerte Stromleitung (210) mit der zweiten elektronischen Regeleinrichtung (130) verbunden ist, die mindestens eine zweite gesteuerte Stromleitung (220) bereitstellt; und wobei mindestens eine zweite gesteuerte Stromleitung (220) mit dem Energie verbrauchenden Gerät (110) verbunden ist, wobei die zweite elektronische Regeleinrichtung (130) Teil der Regeleinrichtung zur Energieversorgung (420) ist und die Einrichtung (100) zum Bereitstellen von elektrischer Energie über die Regeleinrichtung zur Energieversorgung (420) mit der Energieversorgungsanlage (400) oder dem Netz (410) verbunden wird.

2. System (20) nach Patentanspruch 1, wobei die Einrichtung (100) zum Bereitstellen von elektrischer Energie der Anordnung (10) mehrere verfügbare Stromleitungen hat, wobei diese mehreren verfügbaren Stromleitungen auf die gleiche Weise angeordnet sind.

3. System (20) nach Patentanspruch 1 oder 2, wobei die erste elektronische Regeleinrichtung (120) der Anordnung (10) nur in der Lage ist, eine Ein-/AusSteuerung basierend auf einer Referenztemperatur bereitzustellen, und die zweite elektronische Regeleinrichtung (130) in der Lage ist, eine variable Leistungssteuerung bereitzustellen.

4. System (20) nach einem der vorhergehenden Patentansprüche, wobei die erste elektronische Regeleinrichtung (120) mit einer Sicherheitsschutzregelung versehen ist.

5. System (20) nach einem der vorhergehenden Patentansprüche, das allein durch die Verwendung eines Leistungssensors (500) betrieben werden kann, der Teil der Steuereinrichtung zur Energieversorgung ist; und einen Temperatursensor (510), der Teil der ersten elektronischen Regeleinrichtung (120) ist.

6. Verfahren zum energieeffizienten Betreiben eines Energieerzeugungs- und - verbrauchssystems (20) gemäß den Patentansprüchen 1 bis 5, umfassend den folgenden Schritten: Verwendung eines ersten Regelkreises (300) basierend auf der Temperatur durch Verwenden der ersten elektronischen Regeleinrichtung (120), angepasst zum Bestimmen der erreichten Temperatur, und Verwendung eines zweiten Regelkreises (310) basierend auf dem Energiefluss durch Verwendung der zweiten elektronischen Regeleinrichtung (130), angepasst zum Bestimmen energieeffizienter Leistungsbedingungen, wobei der erste und der zweite Regelkreis (300, 310) vollständig entkoppelt sind.

## Revendications

1. Système de production et de consommation d'électricité efficace en énergie (20), comprenant une installation de fourniture d'énergie (400) ; un dispositif de consommation d'énergie (110) pour le chauffage électrique, de préférence avec une capacité de stockage d'énergie ; par lequel le système comprend en outre un dispositif de commande d'alimentation (420) adapté pour déterminer s'il est efficace de fournir l'énergie produite au réseau (410) ou pour une utilisation directe autrement par ledit dispositif de consommation d'énergie ; et un agencement de chauffage électrique (10) comprenant : un moyen (100) pour fournir de l'énergie électrique ; un dispositif à alimentation électrique (110) pour le chauffage électrique ; un premier dispositif de commande électronique (120) adapté pour déterminer la température atteinte et capable d'agir sur au moins une partie dudit moyen (100) pour fournir de l'énergie électrique conformément à celui-ci ; un second dispositif de commande électronique (130) adapté pour déterminer des conditions d'alimentation efficace en énergie et capable d'agir sur au moins une partie dudit moyen (100) pour fournir de l'énergie électrique conformément à celui-ci ; selon lequel, dans cet agencement de chauffage électrique, au moins une partie (200) dudit moyen (100) pour fournir de l'énergie électrique étant raccordée audit premier dispositif de commande électronique (120), qui fournit au moins une première ligne d'alimentation commandée (210) ; ladite au moins une première ligne d'alimentation commandée (210) étant raccordée audit second dispositif de commande électronique (130), qui fournit au moins une seconde ligne d'alimentation commandée (220) ; et ladite au moins une seconde ligne d'alimentation commandée (220) étant raccordée audit dispositif de consommation d'énergie (110), dans lequel ledit second dispositif de commande électronique (130) faisant partie dudit dispositif de commande d'alimentation (420), et ledit moyen (100) pour fournir de l'énergie électrique étant raccordé à ladite installation de fourniture d'énergie (400) ou au réseau (410) par l'intermédiaire dudit dispositif de commande d'alimentation (420).

2. Système (20) de la revendication 1, dans lequel ledit moyen (100) de fourniture d'énergie électrique de l'agencement (10) est pourvu d'une pluralité de lignes électriques disponibles, ladite pluralité de lignes électriques disponibles étant agencée de la même manière.

3. Système (20) de la revendication 1 ou 2, dans lequel ledit premier dispositif de commande électronique (120) de l'agencement (10) étant uniquement capable de fournir un contrôle marche-arrêt basé sur une température de référence, et ledit second dispositif de commande électronique (130) étant capable de fournir une commande d'alimentation variable.

4. Système (20) de l'une quelconque des revendications précédentes, dans lequel ledit premier dispositif de commande électronique (120) est pourvu d'une réglementation de protection de sécurité.

5. Système (20) de l'une quelconque des revendications précédentes, étant utilisable uniquement par l'utilisation d'un capteur de puissance (500) faisant partie dudit dispositif de commande d'alimentation ; et un capteur de température (510) faisant partie dudit premier dispositif de commande électronique (120).

6. Procédé de fonctionnement efficace en énergie d'un système de production et de consommation d'énergie (20) selon les revendications 1 à 5, comprenant les étapes suivantes: l'utilisation d'une première boucle de régulation (300) sur la base de la température par l'utilisation du premier dispositif de commande électronique (120) adapté pour déterminer la température atteinte et l'utilisation d'une seconde boucle de régulation (310) sur la base du flux d'énergie par l'utilisation du second dispositif de commande électronique (130) adapté pour déterminer des conditions d'alimentation efficace en énergie, selon lequel lesdites première et seconde boucles de régulation (300, 310) étant entièrement découplées.
